# EUROPÄISCHE PATENTSCHRIFT

(11) **EP 3 491 859 B1**
(45) Veröffentlichungstag und Bekanntmachung des Hinweises auf die Patenterteilung: **01.09.2021**
(21) Anmeldenummer: 17742783.8
(22) Anmeldetag: 28.07.2017
(51) Int. Cl.: H04W 8/20, H04W 12/72

(54) **PROFILSERVER ZUM BEREITSTELLEN VON ELEKTRONISCHEN KOMMUNIKATIONSPROFILEN FÜR ELEKTRONISCHE TEILNEHMERIDENTITÄTSMODULE (ESIMS)**
PROFILE SERVER FOR PROVIDING ELECTRONIC COMMUNICATION PROFILES FOR ELECTRONIC SUBSCRIBER IDENTITY MODULES (ESIMS)
SERVEUR DE PROFIL DESTINE A PREPARER DES PROFILS DE COMMUNICATION ELECTRONIQUES POUR DES MODULES D'IDENTITE D'ABONNE (ESIMS)

(30) Priorität: 29.07.2016 EP 16182102
(43) Veröffentlichungstag der Anmeldung: 05.06.2019
(73) Patentinhaber: Deutsche Telekom AG, 53113 Bonn (DE)
(72) Erfinder: KALINER, Stefan, 53639 Königswinter (DE)
(74) Vertreter: Raible Deissler Lehmann Patentanwälte PartG mbB
(86) Internationale Anmeldenummer: PCT/EP2017/069196
(87) Internationale Veröffentlichungsnummer: WO 2018/020011

(56) Entgegenhaltungen:
- EP-A1- 2 986 044
- US-A1- 2014 219 447

## Beschreibung

Die vorliegende Erfindung betrifft das Gebiet der elektronischen Teilnehmeridentifikationsmodule (eSIM: electronic Subscriber Identification Module).

Elektronische Teilnehmeridentifikationsmodule (eSIMs) sind in mobilen Kommunikationsgeräten als festverdrahtete Hardwareschaltungen implementiert. Für eine Kommunikation über ein Kommunikationsnetzwerk benötigt jedes eSIM ein Kommunikationsprofil (eSIM-Profil), das einem Betreiber des Kommunikationsnetzwerks zugeordnet ist. Das Kommunikationsprofil bestimmt die Kommunikationsfähigkeit, wie beispielsweise eine zulässige Datenrate, des mit einem eSIM ausgestatteten mobilen Kommunikationsgerätes.

Im Auslieferungszustand sind die eSIMs in der Regel mit einem Bootstrapprofil versehen, welches eine initiale Konnektivität in das Kommunikationsnetzwerk ermöglicht und welches die Netzwerkadresse eines Discovery-Servers enthält. Der Discovery-Server ist vorgeschaltet und enthält die Angaben über Profilserver wie beispielsweise SMDP+ Server, welche die Kommunikationsprofile für die eSIMs verwalten.

Bei erstem Einbuchen in das Kommunikationsnetz übermittelt die eSIM die elektronische Identifikation (eID) eines eSIMs an den Discovery-Server. Dieser kann auf dieser Basis den Profilserver (z.B. SMDP+ Server) der eSIM zuordnen und die Netzwerkadresse des Profilservers an die eSIM übertragen.

Das Dokument US 2014/0219447 A1 offenbart ein Verfahren zum Verwalten von elektronischen Teilnehmeridentitätsmodulen ("embedded SIM", "eSIM", "eUICC") in einer Architektur bestehend aus Netzbetreiber ("mobile network operator, MNO"), Teilnehmeridentitätsmodul-Anbieter ("eUICC vendor"), Gerätehersteller ("device manufacturer") und Teilnehmerverwaltung ("subscription manager, SM").

Es garantiert dass stets nur ein aktives Profil (mit "IMSI", "subscription credentials", "K", "additional service applications", "additional service data", etc) in einer eUICC eines mobile Endgeräts existiert und dem HLR hinzugefügt ist.

Das offenbarte Verfahren garantiert außerdem Integrität ("integrity"), Vertraulichkeit ("confidentiality"), Authentizität ("authenticity"), Verschlüsselung (Verwendung von "public key", "private key") beim sicheren Herunterladen eines Profils ("OTA-provisioning") in ein mobiles Kommunikationsgerät.

Hat ein Benutzer jedoch mehrere Kommunikationsgeräte, welche jeweils mit einem eSIM ausgestattet sind, beispielsweise mehrere Hausgeräte, so muss für jedes Hausgerät ein Profil für die jeweilige eSIM bereitgestellt werden.

Es ist daher die Aufgabe der Erfindung, mehrere Kommunikationsprofile für die eSIMs von mehreren mobilen Kommunikationsgeräten eines Benutzers effizient bereitzustellen.

Diese Aufgabe wird durch die Merkmale der unabhängigen Ansprüche gelöst. Vorteilhafte Weiterbildungsformen sind Gegenstand der abhängigen Ansprüche, der Figuren sowie der Beschreibung.

Die Erfindung basiert auf der Erkenntnis, dass die obige Aufgabe durch eine Gruppierung von Kommunikationsprofilen von eSIMs, welche einem Benutzer und insbesondere einer Vertragsbeziehung zwischen dem Benutzer und dem Betreiber des Kommunikationsnetzwerks zugeordnet sind, gelöst werden kann. Auf diese Weise können mehrere Kommunikationsprofile gemeinsam für einen Benutzer verwaltet werden. Gemäß einem ersten Aspekt betrifft die Erfindung einen Profilserver zum Bereitstellen von elektronischen Kommunikationsprofilen für eine Gruppe von elektronischen Teilnehmeridentitätsmodulen (eSIM) mobiler Kommunikationsgeräte, welche einem Benutzer eines Kommunikationsnetzwerks zugeordnet sind, wobei jedem elektronischen Teilnehmeridentitätsmodul eine elektronische Identifikation (eID) zugeordnet ist, mit einem Speicher, welcher eingerichtet ist, eine Mehrzahl von Gruppen von elektronischen Kommunikationsprofilen zu speichern, wobei jede Gruppe von elektronischen Kommunikationsprofilen elektronischen Teilnehmeridentitätsmodulen mobiler Kommunikationsgeräte eines Benutzers zugeordnet ist, einer Kommunikationsschnittstelle zum Empfangen einer elektronischen Identifikation eines elektronischen Teilnehmeridentitätsmoduls, und einem Prozessor, welcher ausgebildet ist, der empfangenen elektronischen Identifikation eine in dem Speicher gespeicherte Gruppe von elektronischen Kommunikationsprofilen zuzuordnen und ein elektronisches Kommunikationsprofil aus der Gruppe von elektronischen Kommunikationsprofilen, welche der empfangenen elektronischen Identifikation zugeordnet ist, auszuwählen, wobei die Kommunikationsschnittstelle ausgebildet ist, das ausgewählte elektronische Kommunikationsprofil an das mobile Kommunikationsgerät mit dem elektronischen Teilnehmeridentitätsmodul, das durch die elektronische Identifikation identifiziert ist, auszusenden,
wobei der Speicher (107) ausgebildet ist, elektronische Identifikationen zu speichern, welche einer Gruppe von elektronischen Kommunikationsprofilen zugeordnet sind, und wobei der Prozessor (111) ausgebildet ist, für die Zuordnung der Gruppe von elektronischen Kommunikationsprofilen zur empfangenen elektronischen Identifikation die empfangene elektronische Identifikation mit den gespeicherten elektronischen Identifikationen zu vergleichen, um die Gruppe von elektronischen Kommunikationsprofilen, welche der empfangenen elektronischen Identifikation zugeordnet ist, auszuwählen.

In einer Ausführungsform ist die Kommunikationsschnittstelle ausgebildet, eine Mehrzahl von elektronischen Identifikationen von elektronischen Teilnehmeridentitätsmodulen zu empfangen, wobei der Prozessor ausgebildet ist, der Mehrzahl von empfangenen elektronischen Identifikationen eine Gruppe oder mehrere Gruppen von elektronischen Teilnehmeridentitätsmodulen zuzuordnen, für jedes elektronische Teilnehmeridentitätsmodul ein Kommunikationsprofil aus der zugeordneten Gruppe von Kommunikationsprofilen auszuwählen und das jeweils ausgewählte Kommunikationsprofil an das jeweilige mobile Kommunikationsgerät auszusenden.

In einer Ausführungsform ist jede Gruppe von elektronischen Kommunikationsprofilen durch einen Identifikator identifizierbar, wobei jeder Identifikator elektronischen Identifikationen zugeordnet ist, und wobei der Prozessor ausgebildet ist, der empfangenen elektronischen Identifikation den Identifikator der Gruppe von elektronischen Kommunikationsprofilen zuzuordnen.

In einer Ausführungsform ist jede Gruppe von elektronischen Kommunikationsprofilen einer elektronischen Vertragsbeziehung zwischen einem Benutzer des Kommunikationsnetzwerks und einem Betreiber des Kommunikationsnetzwerks zugeordnet, wobei der Prozessor ausgebildet ist, der empfangenen elektronischen Identifikation die Gruppe von elektronischen Kommunikationsprofilen auf der Basis der Vertragsbeziehung zuzuordnen.

In einer Ausführungsform ist der Profilserver ein SMDP-Server.

In einer Ausführungsform ist die Kommunikationsschnittstelle eine drahtlose Kommunikationsschnittstelle, insbesondere eine LTE- oder UMTS-Kommunikationsschnittstelle.

Gemäß einem zweiten Aspekt betrifft die Erfindung ein Verfahren zum Bereitstellen von elektronischen Kommunikationsprofilen für eine Gruppe von elektronischen Teilnehmeridentitätsmodulen (eSIM) mobiler Kommunikationsgeräte, welche einem Benutzer eines Kommunikationsnetzwerks zugeordnet sind, wie in Anspruch 7 definiert.

In einer Ausführungsform ist jede Gruppe von elektronischen Kommunikationsprofilen durch einen Identifikator identifiziert ist, wobei jeder Identifikator elektronischen Identifikationen zugeordnet ist, und wobei der empfangenen elektronischen Identifikation der Identifikator der Gruppe von elektronischen Kommunikationsprofilen zugeordnet wird.

In einer Ausführungsform ist jede Gruppe von elektronischen Kommunikationsprofilen einer elektronischen Vertragsbeziehung zwischen einem Benutzer des Kommunikationsnetzwerks und einem Betreiber des Kommunikationsnetzwerks zugeordnet, wobei der empfangenen elektronischen Identifikation die Gruppe von elektronischen Kommunikationsprofilen auf der Basis der Vertragsbeziehung zugeordnet wird.

Gemäß einem dritten Aspekt betrifft die Erfindung ein Subnetzwerk eines Kommunikationsnetzwerks mit einer Mehrzahl von Subnetzwerken, insbesondere von Punkt-zu-Punkt-Subnetzwerken, wobei das Subnetzwerk ausgebildet ist, elektronische Kommunikationsprofile für eine Gruppe von elektronischen Teilnehmeridentitätsmodulen (eSIM) mobiler Kommunikationsgeräte, welche einem Benutzer eines Kommunikationsnetzwerks zugeordnet sind, bereitzustellen, wobei jedem elektronischen Teilnehmeridentitätsmodul eine elektronische Identifikation (eID) zugeordnet ist, mit dem Profilserver nach dem ersten Aspekt.

In einer Ausführungsform ist das Subnetzwerk ein Punkt-zu-Punkt-Subnetzwerk oder eine Slice eines 5G-Kommunikationsnetzwerks.

In einer Ausführungsform ist das Subnetzwerk einem Benutzer des Kommunikationsnetzwerks zugeordnet, wobei der Profilserver ausgebildet ist, ausschließlich elektronische Kommunikationsprofile für die Gruppe von elektronischen Teilnehmeridentitätsmodulen (eSIM) mobiler Kommunikationsgeräte des Benutzers bereitzustellen.

Weitere Ausführungsbeispiele werden Bezug nehmend auf die beiliegenden Figuren näher erläutert. Es zeigen:
- Fig. 1: einen Profilserver in einem Kommunikationsszenario; und
- Fig. 2: ein Profil-Subnetzwerk in einem Kommunikationsszenario.

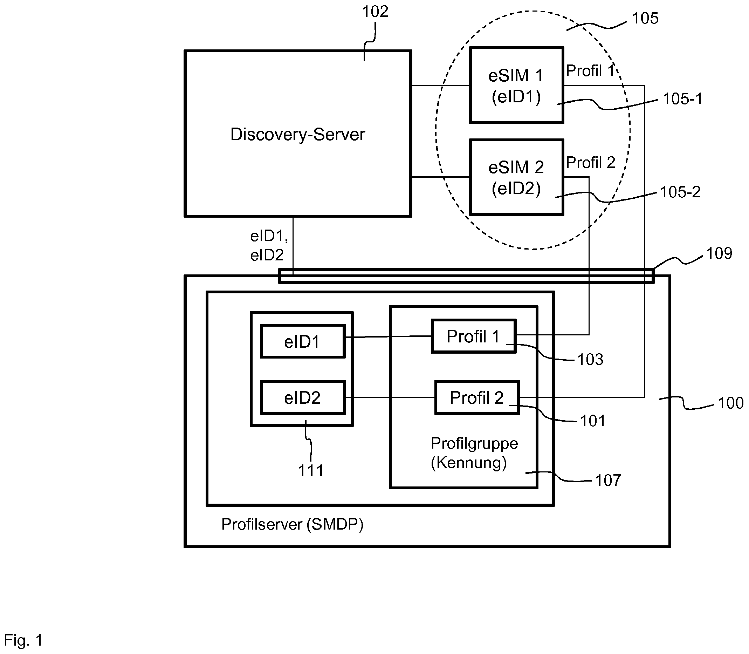

Fig. 1 zeigt einen Profilserver 100 in einem Kommunikationsszenario mit einem Discovery-Server 102. Der Profilserver 100 ist zum Bereitstellen von elektronischen Kommunikationsprofilen 101, 103 für eine Gruppe 105 von elektronischen Teilnehmeridentitätsmodulen 105-1, 105-2 (eSIMs) mobiler Kommunikationsgeräte, welche einem Benutzer eines Kommunikationsnetzwerks, beispielsweise eines Mobilfunknetzwerks, zugeordnet sind, vorgesehen. Dabei ist jedem elektronischen Teilnehmeridentitätsmodul 105-1, 105-2 eine elektronische Identifikation (eID: electronic Identification) zugeordnet.

Der Profilserver 100 umfasst einen Speicher 107, welcher eingerichtet ist, eine Mehrzahl von Gruppen 105 von elektronischen Kommunikationsprofilen 101, 103 zu speichern, wobei jede Gruppe 105 von elektronischen Kommunikationsprofilen 101, 103 elektronischen Teilnehmeridentitätsmodulen 105-1, 105-2 mobiler Kommunikationsgeräte eines Benutzers zugeordnet sind.

Der Profilserver 100 umfasst ferner eine Kommunikationsschnittstelle 109 zum Empfangen einer elektronischen Identifikation eines elektronischen Teilnehmeridentitätsmoduls. Die Kommunikationsschnittstelle 109 ist eine drahtlose Kommunikationsschnittstelle, beispielsweise eine LTE- oder UMTS-Kommunikationsschnittstelle.

Der Profilserver 100 umfasst ferner einen Prozessor 111, welcher ausgebildet ist, der empfangenen elektronischen Identifikation eine in dem Speicher 107 gespeicherte Gruppe von elektronischen Kommunikationsprofilen 101, 103 zuzuordnen und ein elektronisches Kommunikationsprofil 101, 103 aus der Gruppe von elektronischen Kommunikationsprofilen 101, 103, welche der empfangenen elektronischen Identifikation zugeordnet ist, auszuwählen.

Die Kommunikationsschnittstelle 109 ist ausgebildet, das ausgewählte elektronische Kommunikationsprofil 101, 103 an das mobile Kommunikationsgerät mit dem elektronischen Teilnehmeridentitätsmodul 105-1, 105-2, das durch die elektronische Identifikation identifiziert ist, auszusenden.

Im Profilserver 100 wird dem Benutzer eine eSIM/eID-Gruppe zugeordnet, wobei jeder eSIM der eSIM-Gruppe ein Kommunikationsprofil zugeordnet ist, das beispielsweise die Anforderungen der ggf. unterschiedlichen Kommunikationsgeräte an Konnektivität, beispielswese Datenrate, erfüllt. So hat beispielsweise ein Internet-fähiger Kühlschrank weniger Bandbreitenbedarf als ein Smartphone (UE), sodass dem Kühlschrank weniger Bandbreite zugewiesen werden kann als dem UE.

In einer Ausführungsform können die eSIMs Bootstrapprofile aufweisen, welche eine initiale Konnektivität zu dem in Fig. 1 beispielhaft dargestellten Discovery-Server 102 herstellen. Der Discovery-Server 102 übermittelt daraufhin eine URI des Profilservers 100 an das in Fig. 1 nicht dargestellte mobile Kommunikationsgerät, das daraufhin ein Kommunikationsprofil bei dem Profilserver 100 abrufen kann.

In einer anderen Ausführungsform haben die eSIMs Kenntnis der URI des Profilservers 100, welcher direkt und ohne Umweg über den Discovery-Server 102 angesteuert werden kann. In diesem Fall kann auf den Discovery-Server 102 verzichtet werden.

Der Profilserver 100, welcher ein SMDP+-Server sein kann, ordnet in einer Ausführungsform beispielsweise die eIDs der eSIMs 105-1, 105-2 einer Vertragsbeziehung zwischen dem Benutzer und einem Betreiber des Kommunikationsnetzwerks zu. Dadurch können die eSIMs 105-1, 105-2 einer Profilgruppe und somit einem Vertrag zugeordnet werden. Die Profile werden dann an die eSIMs (eUICCs) übertragen.

In einer Ausführungsform kann der Profilserver 100 in einem Punkt-zu-Punkt-Subnetzwerk angeordnet werden, welches als Dienst die vorstehend beschriebene Verwaltung von Kommunikationsprofilen bereitstellt.

In einer Ausführungsform kann in dem Profilserver 100 eine weitere eID einer weiteren eSIM sowie der Gruppe von Kommunikationsprofilen ein weiteres Kommunikationsprofil hinzugefügt werden. Auf diese Weise können adaptiv weitere Kommunikationsgeräte, welche beispielsweise einem Vertrag des Benutzers zugeordnet sind, effizient verwaltet werden.

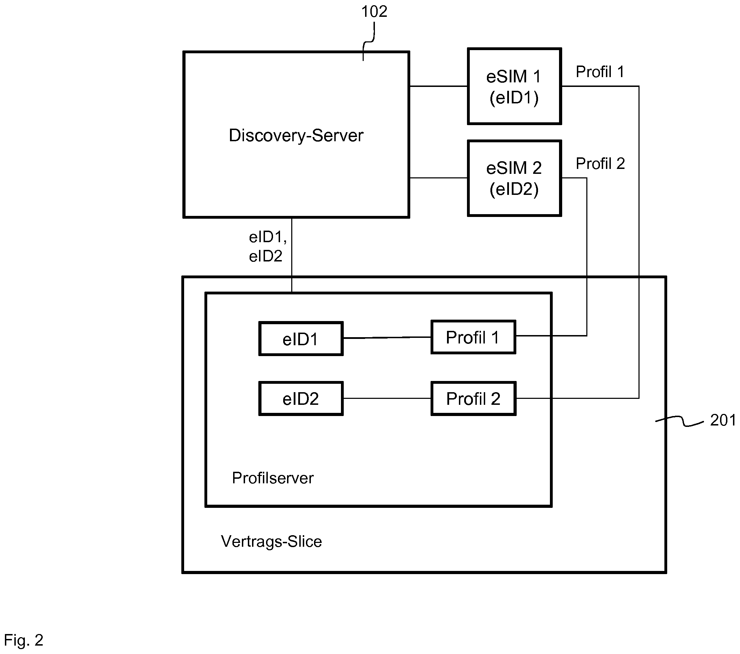

Fig. 2 zeigt schematisch ein derartiges Subnetzwerk 201, welches ein Slice eines 5G-Kommunikationsnetzwerks sein kann. Das Subnetzwerk 201 ist beispielsweise ein Punkt-zu-Punkt-Subnetzwerk.

Das Subnetzwerk 201 ist ausgebildet, elektronische Kommunikationsprofile 101, 103 für eine Gruppe von elektronischen Teilnehmeridentitätsmodulen 105-1, 105-2 mobiler Kommunikationsgeräte, welche einem Benutzer eines Kommunikationsnetzwerks zugeordnet sind, bereitzustellen, wobei jedem elektronischen Teilnehmeridentitätsmodul 105-1, 105-2 eine elektronische Identifikation (eID) zugeordnet ist. In dem Subnetzwerk 201 ist der Profilserver 100 angeordnet.

Das Subnetzwerk 201 kann für einen einzigen Benutzer bereitgestellt werden und ausgebildet sein, die Kommunikationsprofile der eSIMs, welche dem Benutzer beispielsweise aufgrund eines Vertrags zugeordnet sind, zu verwalten.

In einer Ausführungsform kann die URI des Subnetzwerks 201 im Discovery-Server 102 hinterlegt werden.

In einer Ausführungsform kann auf den Discovery-Server 102 verzichtet werden, indem die Bootstrapprofile der eSIMs die URI des Subnetzwerks 201 kennen.

In einer Ausführungsform ist der Discovery-Server 102 kein Element des Subnetzwerks 201. In einer weiteren Ausführungsform ist der Discovery-Server 102 ein Element des Subnetzwerks 201.

## Patentansprüche

1. Profilserver (100) zum Bereitstellen von elektronischen Kommunikationsprofilen (101, 103)für eine Gruppe (105) von elektronischen Teilnehmeridentitätsmodulen (105-1, 105-2) mobiler Kommunikationsgeräte, welche einem Benutzer eines Kommunikationsnetzwerks zugeordnet sind, wobei jedem elektronischen Teilnehmeridentitätsmodul (105-1, 105-2) eine elektronische Identifikation, eID zugeordnet ist, mit:
einem Speicher (107), welcher eingerichtet ist, eine Mehrzahl von Gruppen (105) von elektronischen Kommunikationsprofilen (101, 103) zu speichern, wobei jede Gruppe (105) von elektronischen Kommunikationsprofilen (101, 103) elektronischen Teilnehmeridentitätsmodulen (105-1, 105-2) mobiler Kommunikationsgeräte eines Benutzers zugeordnet ist;
einer Kommunikationsschnittstelle (109) zum Empfangen einer elektronischen Identifikation eines elektronischen Teilnehmeridentitätsmoduls; und
einem Prozessor (111), welcher ausgebildet ist, der empfangenen elektronischen Identifikation eine in dem Speicher (107) gespeicherte Gruppe von elektronischen Kommunikationsprofilen (101, 103) zuzuordnen und ein elektronisches Kommunikationsprofil (101, 103) aus der Gruppe von elektronischen Kommunikationsprofilen (101, 103), welche der empfangenen elektronischen Identifikation zugeordnet ist, auszuwählen; wobei
die Kommunikationsschnittstelle (109) ausgebildet ist, das ausgewählte elektronische Kommunikationsprofil (101, 103) an das mobile Kommunikationsgerät mit dem elektronischen Teilnehmeridentitätsmodul (105-1, 105-2), das durch die elektronische Identifikation identifiziert ist, auszusenden,
wobei der Speicher (107) ausgebildet ist, elektronische Identifikationen zu speichern, welche einer Gruppe von elektronischen Kommunikationsprofilen zugeordnet sind, und wobei der Prozessor (111) ausgebildet ist, für die Zuordnung der Gruppe von elektronischen Kommunikationsprofilen zur empfangenen elektronischen Identifikation die empfangene elektronische Identifikation mit den gespeicherten elektronischen Identifikationen zu vergleichen, um die Gruppe von elektronischen Kommunikationsprofilen, welche der empfangenen elektronischen Identifikation zugeordnet ist, auszuwählen.

2. Profilserver (100) nach Anspruch 1, wobei die Kommunikationsschnittstelle (109) ausgebildet ist, eine Mehrzahl von elektronischen Identifikationen von elektronischen Teilnehmeridentitätsmodulen zu empfangen, wobei der Prozessor (111) ausgebildet ist, der Mehrzahl von empfangenen elektronischen Identifikationen eine Gruppe oder mehrere Gruppen von elektronischen Teilnehmeridentitätsmodulen zuzuordnen, für jedes elektronische Teilnehmeridentitätsmodul ein Kommunikationsprofil aus der zugeordneten Gruppe von Kommunikationsprofilen auszuwählen und das jeweils ausgewählte Kommunikationsprofil an das jeweilige mobile Kommunikationsgerät auszusenden.

3. Profilserver (100) nach einem der vorstehenden Ansprüche, wobei jede Gruppe von elektronischen Kommunikationsprofilen durch einen Identifikator identifiziert ist, wobei jeder Identifikator elektronischen Identifikationen zugeordnet ist, und wobei der Prozessor (111) ausgebildet ist, der empfangenen elektronischen Identifikation den Identifikator der Gruppe von elektronischen Kommunikationsprofilen zuzuordnen.

4. Profilserver (100) nach einem der vorstehenden Ansprüche, wobei jede Gruppe von elektronischen Kommunikationsprofilen einer elektronischen Vertragsbeziehung zwischen einem Benutzer des Kommunikationsnetzwerks und einem Betreiber des Kommunikationsnetzwerks zugeordnet ist, und wobei der Prozessor (111) ausgebildet ist, der empfangenen elektronischen Identifikation die Gruppe von elektronischen Kommunikationsprofilen auf der Basis der Vertragsbeziehung zuzuordnen.

5. Profilserver (100) nach einem der vorstehenden Ansprüche, welcher ein SMDP-Server ist.

6. Profilserver (100) nach einem der vorstehenden Ansprüche, wobei die Kommunikationsschnittstelle (109) eine drahtlose Kommunikationsschnittstelle, insbesondere eine LTE- oder UMTS-Kommunikationsschnittstelle ist.

7. Verfahren zum Bereitstellen von elektronischen Kommunikationsprofilen (101, 103) für eine Gruppe (105) von elektronischen Teilnehmeridentitätsmodulen (105-1, 105-2) mobiler Kommunikationsgeräte, welche einem Benutzer eines Kommunikationsnetzwerks zugeordnet sind, wobei jedem elektronischen Teilnehmeridentitätsmodul (105-1, 105-2) eine elektronische Identifikation, eID zugeordnet ist, durchgeführt durch einen Profilserver, mit:
Bereitstellen einer Mehrzahl von Gruppen von elektronischen Kommunikationsprofilen, wobei jede Gruppe von elektronischen Kommunikationsprofilen elektronischen Teilnehmeridentitätsmodulen mobiler Kommunikationsgeräte eines Benutzers zugeordnet ist;
Empfangen einer elektronischen Identifikation eines elektronischen Teilnehmeridentitätsmoduls (105-1, 105-2);
Zuordnen einer Gruppe von elektronischen Kommunikationsprofilen (101, 103) zu der empfangenen elektronischen Identifikation;
Auswählen eines elektronischen Kommunikationsprofils (101, 103) aus der Gruppe von elektronischen Kommunikationsprofilen, welche der empfangenen elektronischen Identifikation zugeordnet ist; und
Aussenden des ausgewählten elektronischen Kommunikationsprofils (101, 103) an das mobile Kommunikationsgerät mit dem elektronischen Teilnehmeridentitätsmodul (105-1, 105-2), das durch die elektronische Identifikation identifiziert ist,
wobei für die Zuordnung der Gruppe von elektronischen Kommunikationsprofilen zur empfangenen elektronischen Identifikation die empfangene elektronische Identifikation mit gespeicherten elektronischen Identifikationen, welche einer Gruppe von elektronischen Kommunikationsprofilen zugeordnet sind, verglichen wird, um die Gruppe von elektronischen Kommunikationsprofilen, welche der empfangenen elektronischen Identifikation zugeordnet ist, auszuwählen.

8. Verfahren nach Anspruch 7, mit:
Empfangen einer Mehrzahl von elektronischen Identifikationen von elektronischen Teilnehmeridentitätsmodulen;
Zuordnen der Mehrzahl von empfangenen elektronischen Identifikationen zu einer Gruppe oder zu mehreren Gruppen von elektronischen Teilnehmeridentitätsmodulen;
Auswählen eines Kommunikationsprofils aus der zugeordneten Gruppe von Kommunikationsprofilen für jedes elektronische Teilnehmeridentitätsmodul; und
Aussenden des jeweils ausgewählten Kommunikationsprofils an das jeweilige mobile Kommunikationsgerät über das Kommunikationsnetzwerk.

9. Verfahren nach Anspruch 7 oder 8, wobei jede Gruppe von elektronischen Kommunikationsprofilen durch einen Identifikator identifiziert ist, wobei jeder Identifikator elektronischen Identifikationen zugeordnet ist, und wobei der empfangenen elektronischen Identifikation der Identifikator der Gruppe von elektronischen Kommunikationsprofilen zugeordnet wird.

10. Verfahren nach einem der Ansprüche 7 bis 9, wobei jede Gruppe von elektronischen Kommunikationsprofilen einer elektronischen Vertragsbeziehung zwischen einem Benutzer des Kommunikationsnetzwerks und einem Betreiber des Kommunikationsnetzwerks zugeordnet ist, und der empfangenen elektronischen Identifikation die Gruppe von elektronischen Kommunikationsprofilen auf der Basis der Vertragsbeziehung zugeordnet wird.

11. Subnetzwerk (201) eines Kommunikationsnetzwerks mit einer Mehrzahl von Subnetzwerken, insbesondere von Punkt-zu-Punkt-Subnetzwerken, wobei das Subnetzwerk (201) ausgebildet ist, elektronische Kommunikationsprofile (101, 103) für eine Gruppe von elektronischen Teilnehmeridentitätsmodulen (105-1, 105-2) mobiler Kommunikationsgeräte, welche einem Benutzer eines Kommunikationsnetzwerks zugeordnet sind, bereitzustellen, wobei jedem elektronischen Teilnehmeridentitätsmodul (105-1, 105-2) eine elektronische Identifikation, eID zugeordnet ist, mit:
dem Profilserver (100) nach einem der Ansprüche 1 bis 6.

12. Subnetzwerk (201) nach Anspruch 11, das ein Punkt-zu-Punkt-Subnetzwerk oder eine Slice eines 5G-Kommunikationsnetzwerks ist.

13. Subnetzwerk (201) nach einem der Ansprüche 11 oder 12, das einem Benutzer des Kommunikationsnetzwerks zugeordnet ist, wobei der Profilserver ausgebildet ist, ausschließlich elektronische Kommunikationsprofile für die Gruppe von elektronischen Teilnehmeridentitätsmodulen, eSIM, mobiler Kommunikationsgeräte des Benutzers bereitzustellen.

## Claims

1. A profile server (100) for providing electronic communication profiles (101,103) for a group (105) of electronic subscriber identity modules (105-1,105-2) of mobile communication devices assigned to a user of a communication network, wherein each electronic subscriber identity module (105-1,105-2) is assigned an electronic identification, elD, with:
a memory (107) configured to store a plurality of groups (105) of electronic communication profiles (101, 103), wherein each group (105) of electronic communication profiles (101, 103) is assigned to electronic subscriber identity modules (105-1, 105-2) of mobile communication devices of a user;
a communication interface (109) for receiving an electronic identification of an electronic subscriber identity module; and
a processor (111) configured to assign to the received electronic identification a group of electronic communication profiles (101, 103) stored in the memory (107) and to select an electronic communication profile (101, 103) from the group of electronic communication profiles (101, 103) assigned to the received electronic identification; wherein
the communication interface (109) is configured to transmit the selected electronic communication profile (101, 103) to the mobile communication device having the electronic subscriber identity module (105-1, 105-2) identified by the electronic identification,
wherein the memory (107) is configured to store electronic identifications assigned to a group of electronic communication profiles, and wherein the processor (111) is configured, for assigning the group of electronic communication profiles to the received electronic identification, to compare the received electronic identification with the stored electronic identifications to select the group of electronic communication profiles assigned to the received electronic identification.

2. The profile server (100) according to claim 1, wherein the communication interface (109) is configured to receive a plurality of electronic identifications from electronic subscriber identity modules, wherein the processor (111) is configured to assign one or more groups of electronic subscriber identity modules to the plurality of received electronic identifications, to select from the assigned group of communication profiles a communication profile for each electronic subscriber identity module, and to transmit the respective selected communication profile to the respective mobile communication device.

3. The profile server (100) according to any of the preceding claims, wherein each group of electronic communication profiles is identified by an identifier, wherein each identifier is assigned to electronic identifications, and wherein the processor (111) is configured to assign the identifier of the group of electronic communication profiles to the received electronic identification.

4. The profile server (100) according to any of the preceding claims, wherein each group of electronic communication profiles is assigned to an electronic contractual relationship between a user of the communication network and an operator of the communication network, and wherein the processor (111) is configured to assign the group of electronic communication profiles to the received electronic identification based on the contractual relationship.

5. The profile server (100) according to any of the preceding claims, which is an SMDP server.

6. The profile server (100) according to any of the preceding claims, wherein the communication interface (109) is a wireless communication interface, in particular an LTE or UMTS communication interface.

7. A method for providing electronic communication profiles (101, 103) for a group (105) of electronic subscriber identity modules (105-1, 105- 2) of mobile communication devices assigned to a user of a communication network, wherein an electronic identification, elD, is assigned each electronic subscriber identity module (105-1, 105-2), carried out by a profile server, with the steps of:
providing a plurality of groups of electronic communication profiles, wherein each group of electronic communication profiles is assigned to electronic subscriber identity modules of mobile communication devices of a user;
receiving an electronic identification of an electronic subscriber identity module (105-1, 105-2);
assigning a group of electronic communication profiles (101, 103) to the received electronic identification;
selecting an electronic communication profile (101, 103) from the group of electronic communication profiles which is assigned to the received electronic identification; and
transmitting the selected electronic communication profile (101, 103) to the mobile communication device having the electronic subscriber identity module (105-1, 105-2) identified by the electronic identification, wherein, for assigning the group of electronic communication profiles to the received electronic identification, the received electronic identification is compared with stored electronic identifications assigned to a group of electronic communication profiles to select the group of electronic communication profiles assigned to the received electronic identification.

8. The method according to claim 7, with the steps of:
receiving a plurality of electronic identifications from electronic subscriber identity modules;
assigning the plurality of received electronic identifications to one or more groups of electronic subscriber identity modules;
selecting a communication profile from the assigned group of communication profiles for each electronic subscriber identity module; and
transmitting the respective selected communication profile to the respective mobile communication device via the communication network.

9. The method according to claim 7 or 8, wherein each group of electronic communication profiles is identified by an identifier, wherein each identifier is assigned to electronic identifications, and wherein the identifier of the group of electronic communication profiles is assigned to the received electronic identification.

10. The method according to any of claims 7 to 9, wherein each group of electronic communication profiles is assigned to an electronic contractual relationship between a user of the communication network and an operator of the communication network, and the group of electronic communication profiles is assigned to the received electronic identification based on the contractual relationship.

11. A subnetwork (201) of a communication network with a plurality of subnetworks, in particular point-to-point subnetworks, wherein the subnetwork (201) is configured to provide electronic communication profiles (101, 103) for a group of electronic subscriber identity modules (105-1, 105-2) of mobile communication devices assigned to a user of a communication network, wherein an electronic identification, elD, is assigned to each electronic subscriber identity module (105-1, 105-2), with:
the profile server (100) according to any of claims 1 to 6.

12. The subnetwork (201) according to claim 11, which is a point-to-point subnetwork or a slice of a 5G communications network.

13. The subnetwork (201) according to any of claims 11 or 12 assigned to a user of the communication network, wherein the profile server is configured to exclusively provide electronic communication profiles for the group of electronic subscriber identity modules, eSIM, of mobile communication devices of the user.

## Revendications

1. Serveur de profil (100) permettant de fournir des profils de communication électroniques (101, 103) pour un groupe (105) de modules d'identité d'abonné électroniques (105-1, 105-2) d'appareils de communication mobiles, associés à un utilisateur d'un réseau de communication, une identification électronique, elD, étant associée à chaque module d'identité d'abonné électronique (105-1, 105-2), ledit serveur de profil comportant :
une mémoire (107) conçue pour stocker une pluralité de groupes (105) de profils de communication électroniques (101, 103), chaque groupe (105) de profils de communication électroniques (101, 103) étant associé à des modules d'identité d'abonné électroniques (105-1, 105-2) d'appareils de communication mobiles d'un utilisateur ;
une interface de communication (109) destinée à recevoir une identification électronique d'un module d'identité d'abonné électronique ; et
un processeur (111) conçu pour associer un groupe de profils de communication électroniques (101, 103), stocké dans la mémoire (107), à l'identification électronique reçue et pour sélectionner un profil de communication électronique (101, 103) dans le groupe de profils de communication électroniques (101, 103), associé à l'identification électronique reçue, dans lequel
l'interface de communication (109) est conçue pour envoyer le profil de communication électronique (101, 103) sélectionné à l'appareil de communication mobile comportant le module d'identité d'abonné électronique (105-1, 105-2) identifié par l'identification électronique,
la mémoire (107) étant conçue pour stocker des identifications électroniques associées à un groupe de profils de communication électronique et le processeur (111) étant conçu, dans le but d'associer le groupe de profils de communication électroniques à l'identification électronique reçue, pour comparer l'identification électronique reçue avec les identifications électroniques stockées, afin de sélectionner le groupe de profils de communication électroniques associé à l'identification électronique reçue.

2. Serveur de profil (100) selon la revendication 1, l'interface de communication (109) étant conçue pour recevoir une pluralité d'identifications électroniques de modules d'identité d'abonné électroniques, le processeur (111) étant conçu pour associer un ou plusieurs groupes de modules d'identité d'abonné électroniques à la pluralité d'identifications électroniques reçues, pour sélectionner un module de communication dans le groupe de profils de communication associé pour chaque module d'identité d'abonné électronique et pour envoyer le profil de communication sélectionné à l'appareil de communication mobile correspondant.

3. Serveur de profil (100) selon l'une des revendications précédentes, chaque groupe de profils de communication électroniques étant identifié par un identifiant, chaque identifiant étant associé à des identifications électroniques, et le processeur (111) étant conçu pour associer l'identifiant du groupe de profils de communication électroniques à l'identification électronique reçue.

4. Serveur de profil (100) selon l'une des revendications précédentes, chaque groupe de profils de communication électroniques étant associé à une relation contractuelle électronique entre un utilisateur du réseau de communication et un opérateur du réseau de communication, et le processeur (111) étant conçu pour associer, sur la base de la relation contractuelle, le groupe de profils de communication électroniques à l'identification électronique reçue.

5. Serveur de profil (100) selon l'une des revendications précédentes, qui est un serveur SMDP.

6. Serveur de profil (100) selon l'une des revendications précédentes, l'interface de communication (109) étant une interface de communication sans fil, en particulier une interface de communication LTE ou UMTS.

7. Procédé permettant de fournir des profils de communication électroniques (101, 103) pour un groupe (105) de modules d'identité d'abonné électroniques (105-1, 105-2) d'appareils de communication mobiles qui sont associés à un utilisateur d'un réseau de communication, une identification électronique, elD, étant associée à chaque module d'identité d'abonné électronique (105-1,105-2), ledit procédé étant réalisé par un serveur de profil et comportant les étapes suivantes :
mise à disposition d'une pluralité de groupes de profils de communication électroniques, chaque groupe de profils de communication électroniques étant associé à des modules d'identité d'abonné électroniques d'appareils de communication mobiles d'un utilisateur ;
réception d'une identification électronique d'un module d'identité d'abonné électronique (105-1, 105-2) ;
association d'un groupe de profils de communication électroniques (101, 103) à l'identification électronique reçue ;
sélection d'un profil de communication électronique (101, 103) dans le groupe de profils de communication électroniques associé à l'identification électronique reçue ; et
envoi du profil de communication électronique (101, 103) sélectionné à l'appareil de communication mobile comportant le module d'identité d'abonné électronique (105-1, 105-2), identifié par l'identification électronique, dans le but d'associer le groupe de profils de communication électroniques à l'identification électronique reçue, l'identification électronique reçue étant comparée avec des identifications électroniques stockées, associées à un groupe de profils de communication électronique, afin de sélectionner le groupe de profils de communication électroniques, associé à l'identification électronique reçue.

8. Procédé selon la revendication 7, comportant les étapes suivantes :
réception d'une pluralité d'identifications électroniques venant de modules d'identité d'abonné électroniques ;
association de la pluralité d'identification électroniques reçues à un ou à plusieurs groupes de modules d'identité d'abonné électroniques ;
sélection d'un profil de communication dans le groupe de profils de communication associé pour chaque module d'identité d'abonné électronique ; et
envoi du profil de communication sélectionné à l'appareil de communication mobile correspondant via le réseau de communication.

9. Procédé selon la revendication 7 ou 8, chaque groupe de profils de communication électroniques étant identifié par un identifiant, chaque identifiant étant associé à des identifications électroniques et l'identifiant du groupe de profils de communication électroniques étant associé à l'identification électronique reçue.

10. Procédé selon l'une des revendications 7 à 9, chaque groupe de profils de communication électroniques étant associé à une relation contractuelle électronique entre un utilisateur du réseau de communication et un opérateur du réseau de communication et le groupe de profils de communication électroniques étant associé, sur la base de la relation contractuelle, à l'identification électronique reçue.

11. Sous-réseau (201) d'un réseau de communication comportant une pluralité de sous-réseaux, en particulier des sous-réseaux point-à-point, ledit sous-réseau (201) étant conçu pour fournir des profils de communication électroniques (101, 103) pour un groupe de modules d'identité d'abonné électroniques (105-1, 105-2) d'appareils de communication mobiles associés à un utilisateur d'un réseau de communication, une identification électronique, elD, étant associée à chaque module d'identité d'abonné électronique (105-1, 105-2), ledit sous-réseau comportant :
le serveur de profil (100) selon l'une des revendications 1 à 6.

12. Sous-réseau (201) selon la revendication 11 qui est un sous-réseau point-à-point ou une tranche d'un réseau de communication 5G.

13. Sous-réseau (201) selon l'une des revendications 11 ou 12, associé à un utilisateur du réseau de communication, le serveur de profil étant conçu pour fournir exclusivement des profils de communication électroniques pour le groupe de modules d'identité d'abonné électroniques,(eSIM,d'appareils de communication mobiles de l'utilisateur.
